Europäisches Patentamt

European Patent Office

Office européen des brevets

(11) Publication number: **0 322 101 B1**

(12) EUROPEAN PATENT SPECIFICATION

(45) Date of publication of patent specification: **22.04.92**  (51) Int. Cl.5: **G01M  3/16**

(21) Application number: **88310635.3**

(22) Date of filing: **11.11.88**

(54) A detection system for acid or alkali.

(30) Priority: **30.11.87 GB 8727981**

(43) Date of publication of application:
**28.06.89 Bulletin  89/26**

(45) Publication of the grant of the patent:
**22.04.92 Bulletin  92/17**

(84) Designated Contracting States:
**AT BE CH DE ES FR GB GR IT LI LU NL SE**

(56) References cited:
**EP-A- 0 170 174**
**EP-A- 0 262 667**
**DE-A- 3 623 893**
**US-A- 3 721 970**

**PATENT ABSTRACTS OF JAPAN, vol. 11, no.
399 (P-651)[2846], 26th December 1987 & JP-
A-62 161 045 (JUNKOSHA CO., LTD)
17-07-1987**

(73) Proprietor: **W.L. GORE & ASSOCIATES, INC.
555 Paper Mill Road P.O. Box 9206
Newark Delaware 19714(US)**

(72) Inventor: **Gellan, Andrea
2 Lambert Drive Dunfermline
Fife KY12 7UB Scotland(GB)**

(74) Representative: **McCallum, William Potter et al
Cruikshank & Fairweather 19 Royal Ex-
change Square
Glasgow G1 3AE Scotland(GB)**

## Description

This invention relates to a detection system for acid or alkali and in particular to a detection system for pipelines or storage tanks containing acid or alkali, where leaks could cause environmental damage.

It is known from British Patent Specification 1,586,751 and US Patent 4,206,632 to provide a system for detecting liquid leaks which comprises at least two parallel conductors separated from each other by continuously porous polytetrafluoroethylene (PTFE) containing a conductive material within the pores of the porous PTFE. Such a system is intended for use in detecting the presence of liquid hydrocarbons and vapours from high vapour pressure liquids, which will enter into the continuously porous filled PTFE containing the electro-conductive material and greatly increase the electrical resistance of the material. This increase in resistance can be detected by a sensor connected across the conductors. Such a system however would not respond to the presence of a mineral acid or alkali because the mineral acid or alkali would not enter the porous PTFE or electro-conductive material.

US Patent 4,095,174 describes a similar system for detecting leakages from an oil pipeline which utilises a porous structure of PTFE between two conductors. The system relies on the ability of oil to penetrate the pores of the porous PTFE. Such a system however would not respond to the presence of mineral acid or alkali because the porous PTFE being hydrophobic would prevent the penetration of the acid or alkali.

US Patent 3,981,181 also describes a system similar to that of US Patent 4,095,174 and suggests that, in detecting a liquid which has poorer permeability to the cable insulation, the permeation of the liquid is facilitated by impregnating the porous insulation previously with a substance having affinity to the liquid to be detected. This patent however provides no solution to the problem of detecting the presence of a mineral acid or alkali, and to impregnate the porous insulation with a substance having an affinity for mineral acid or alkali would not assist the detection of a mineral acid or alkali.

Detection systems for liquid acids and alkalis are known which rely on the corrosive effect of the liquid on a metal conductor to break an electrical circuit. However, such systems tend to act only slowly or only with concentrated acids and may be liable to breakdown through contact with environmental corrosives.

Thus European patent specification EP 170174 describes an apparatus for detecting leaks of acid or basic media which comprises a pair of mutually insulated electrical conductors. One of the conductors is formed of aluminium, which becomes corroded in the presence of acid or base. The consequent change in electrical capacity or resistance indicates leakage of acid or base.

German patent specification DE 3623893 discloses a corrosive fluid leak detector which employs an optical fiber surrounded by a jacket comprising a material which generates heat due to the presence of the corrosive fluid. The heat changes the light transmitting properties of the optical fiber, thereby detecting the leakage. The jacket may be expanded porous polytetrafluoroethylene impregnated with a suitable material, such as an ammonium salt or sodium carbonate, which generates heat when in contact with the corrosive fluid.

It is an object of the present invention to provide a detection system for monitoring the presence of acids or bases and in particular mineral acids and alkalis.

According to the present invention there is provided a detection system for monitoring the presence of a liquid consisting of or comprising a mineral or organic acid or alkali, the system comprising a sensor in the form of a pair of conductors extending in side-by-side relationship and isolated from one another by an insulator, the insulator comprising a matrix material impregnated with a substance which is hydrophobic but which on contact with the said liquid reacts to form a substance capable of transmitting the acid or alkali and thereby varying an electrical characteristic of the insulator, and means for detecting a variation in said electrical characteristic.

In the use of the detection system, the sensor can take the form of a cable, in particular a coaxial cable, which is laid underneath a pipeline to be reacted upon by acid or alkali leaking from an opening in the pipeline. Alternatively, the cable could be wrapped helically around the pipeline. The basic method of forming such a cable is described in the prior specifications referred to above.

The preferred substance for use as the matrix material is a microporous material, such for example as expanded microporous polytetrafluoroethylene (PTFE) in the form of a tape which is marketed by W. L. Gore & Associates, Inc, under the registered trade mark GORE-TEX. For the purpose of the present invention, this material is impregnated with an acid-sensitive or base-sensitive additive and used as the insulation between two conductors. The material and additive are hydrophobic so that there is no change in the dielectric properties on contact with water even highly conductive water or neutral PH aqueous solutions. In this respect the cable could be used in outdoor applications without the need for additional waterproofing.

The additive is such that acids or alkalis react with it to remove the hydrophobic properties of the insulation, allowing liquid to permeate through it and alter the electrical characteristics of the composite insulation material.

This change in electrical properties can be measured as a change in characteristic impedance, capacitance or insulation resistance, using standard techniques.

If the location of the presence of the liquid is required to be known, the localised change in characteristic impedance can be measured using time domain reflectometry, which is a well known technique commonly used for fault location in underground cables.

Suitable chemical additives include fatty acid amides, fatty amines, imidazolines, polysiloxanes, aliphatic and aromatic dibasic esters, polyester oligomers, polybutene oligomers and derivatives of ricinoleic acid.

For concentrated acid sensitivity, polysiloxane is the preferred additive due to the inherent environmental stability of the material. The esters, however, tend to show better reactivity towards aqueous acid systems.

A suitable additive to impart alkaline-sensitivity to the sensor is hydroxyl-terminated polybutylene adipate.

The insulation is preferably impregnated with the additive by a solvent carrier technique. The additive is dissolved in a solvent which will "wet out" the insulation material. Examples of such solvents include propanone, butanone, 2-propanol, dichloromethane, trichloroethene, 1,1,1-trichloroethane, tetrachloroethene and 1,1,2-trichloro-1,2,2-trifluoroethane.

The solvent acts as a carrier, transporting the additive into the insulation material. This can be processed by dip coating or vacuum/pressure impregnation.

Vacuum/pressure impregnation is the preferred technique if the thickness of the insulation material is greater than 0.25mm. The solvent is then allowed to evaporate leaving the additive encapsulated in the cellular matrix.

The composite insulation can then be used to separate two conductors, for example in a coaxial configuration or twisted pair arrangement.

Alternatively, the insulation can be impregnated with the additive in the final construction by the aforementioned techniques.

Some examples of detector cables made to test the invention will now be described.

Example 1

100 metres of 7/0.2mm (seven strands of 0.2mm diameter) tin plated copper conductor (TPC) was wrapped with two layers of GORE-TEX (R.T.M.) expanded polytetrafluoro ethylene (PTFE) tape (nominal density 700kg $m^{-3}$) to an overall diameter of 1.6mm.

The cable was passed through a heated dip tank at 40°C with a path length of 200mm, containing an acid sensitive solution, at a line speed of 0.5m $min^{-1}$ and air dried at 90°C. This operation was carried out after application of both the first and second layers of the PTFE tape to the conductor. The acid sensitive solution consisted of 200 grams per litre of oleamide in 2-propanol.

The cable was then braided to a 70% coverage with 1/.1mm (single 0.1mm diameter strand) TPC.

Approximately one metre long lengths of the cable were partly immersed in various acids. The response of the cable was assessed by measuring the characteristic impedance on a time domain reflectometer (TDR) before immersion and at various time intervals afterwards. Sample results are given in Tables 1-3.

As the change in characteristic impedance is restricted to the portion of the cable affected by the acid it is possible to locate such a portion using the TDR.

To ensure that there was no reaction with water a cable sample was immersed in water for 13 days. The results are given in Table 4.

Table 1

| The change in impedance on immersion in concentrated (98% w/w) sulphuric acid. ||
|---|---|
| TIME (MINS) | IMPEDANCE (OHMS) |
| 0 | 55 |
| 5 | 50 |
| 10 | 50 |
| 15 | 47 |
| 20 | 46 |
| 25 | 44 |
| 30 | 39 |
| 33 | Short Circuit |

Table 2

| The change in impedance on immersion in concentrated (36% w/w) hydrochloric acid. ||
|---|---|
| TIME (MINS) | IMPEDANCE (OHMS) |
| 0 | 52 |
| 1 | 48 |
| 5 | 42 |
| 6.5 | Short Circuit |

Table 3

| The change in impedance on immersion in sulphuric acid diluted by 30% by volume. ||
|---|---|
| TIME (MINS) | IMPEDANCE (OHMS) |
| 0 | 52 |
| 1 | 50 |
| 3 | 49 |
| 5 | 48 |
| 7 | 46 |
| 8 | 40 |
| 9 | Short Circuit |

Table 4

| The change in impedance on immersion in water ||
|---|---|
| TIME (DAYS) | IMPEDANCE (OHMS) |
| 0 | 52 |
| 1 | 51 |
| 3 | 51 |
| 7 | 50.5 |
| 13 | 50.5 |

Example 2

25 metres of cable were placed in a pressure vessel and evacuated to -85000 pascals (-850mBar). The additive solution, 30% (by volume) of di(2-ethylhexyl) sebacate in propanone was introduced into the vessel which was then pressurised to 1.4 x $10^5$ pascals (1.4 bar) under nitrogen. The system was then left for 1/2 hour before releasing the pressure and removing the cable sample. The sample was dried in an air oven at 90° for 5 hours.

The sample cable was of a coaxial arrangement with the following construction: central conductor of 19/.45 (19 strands of 0.45mm diameter) TPC, insulation of GORE-TEX (R.T.M.) tape (nominal density 45kg $m^{-3}$) with an overall diameter of 5.5mm and a braid of 1/.1mm TPC with a 90% coverage.

The response of the sensor cable to sulphuric acid was assessed by immersing the central 15cm portion of cable samples, 50cm in length, into the acid and measuring the change in capacitance with respect to time. The results are given in Tables 5 and 6.

To test for resistance of the cable sensor to brackish ground water, end sealed cable samples were immersed in aqueous solutions buffered at pH3 and pH9 in sealed containers. To accelerate sensor ageing the temperature was raised to 90°C. There was no apparent change in performance of the cable samples after immersion for 4 days in the above conditions.

The capacitance change of the aged samples on immersion in concentrated and 50% acid was then measured by the aforementioned test procedure. The results are given in Tables 7-10.

Table 5

| The change in capacitance on immersion in concentrated (98% w/w) sulphuric acid. | | |
|---|---|---|
| CAPACITANCE | | |
| SAMPLE 1 | SAMPLE 2 | TIME (MINS) |
| 50 pF | 53 pF | 0 |
| 79 pF | 76 pF | 1 |
| 85 pF | 80 pF | 2 |
| 89 pF | 88 pF | 3 |
| 94 pF | 400 pF | 4 |
| 100 pF | 3 nF | 5 |
| 480 pF | 13 nF | 6 |
| 44 nF | | 7 |
| 110 nF | | 8 |

Table 6

| The change in capacitance on immersion in sulphuric acid diluted to 50% by volume. | | |
|---|---|---|
| CAPACITANCE | | |
| SAMPLE 1 | SAMPLE 2 | TIME (MINS) |
| 51 pF | 49 pF | 0 |
| 400 nF | 1 $\mu$F | 1 |

Table 7

| The change in capacitance on immersion in concentrated (98% w/w) sulphuric acid after ageing in buffer pH3. | |
|---|---|
| CAPACITANCE | TIME (MINS) |
| 47 pF | 0 |
| 72 pF | 1 |
| 89 pF | 2 |
| 93 pF | 3 |
| 97 pF | 4 |
| 500 pF | 5 |
| 45 nF | 6 |

Table 8

| The change in capacitance on immersion in sulphuric acid diluted to 50% by volume after ageing in buffer pH3. | |
|---|---|
| CAPACITANCE | TIME (MINS) |
| 46 pF | 0 |
| 5 $\mu$F | 1 |

Table 9

| The change in capacitance on immersion in concentrated (98% w/w) sulphuric acid after ageing in buffer pH9. | |
|---|---|
| CAPACITANCE | TIME (MINS) |
| 52 pF | 0 |
| 91 pF | 1 |
| 102 pF | 2 |
| 108 pF | 3 |
| 114 pF | 4 |
| 120 pF | 5 |
| 150 pF | 6 |
| 200 pF | 7 |
| 300 pF | 8 |
| 3 nF | 9 |
| 11 nF | 10 |

Table 10

| The change in capacitance on immersion in sulphuric acid diluted to 50% by volume after ageing in buffer pH9. | |
|---|---|
| CAPACITANCE | TIME (MINS) |
| 48 pF | 0 |
| 1 $\mu$F | 1 |

Example 3

GORE-TEX (R.T.M.) expanded PTFE tape (nominal density 450kg m$^{-3}$) was wrapped on to perforated aluminium cores. These rolls of tape (each containing approximately 50 metres) were then placed in a pressure vessel. The pressure vessel was evacuated to -85000 pascals (-850mBar) and the acid sensitive solution introduced into the vessel. The vessel was then pressurised to 2.6 x 10$^5$ pascals (2.6 Bar) with nitrogen and left under pressure for 5 hours. The rolls of tape were then placed in an air oven at 90°C.

The formulation of the acid sensitive solution used in this experiment consisted of 7.5 litres methyl phenyl polysiloxane, 75ml end-capped polybutylene adipate and 17.5 litres propanone.

The composite insulation tape was then wrapped around a 19/.45mm TPC conductor to an overall diameter 5.5mm.

The cable core was then braided with an overall brass armouring (90% coverage, 1/.3mm 80:20 brass) to act as the electrical return path and mechanical protection.

The response of the sensor cable to concentrated sulphuric acid (98% standard reagent grade) was assessed by immersing the central portion (approximately 7.5cm or 15cm in length of cable samples 15 or 25cm in length) in acid and measuring the change in capacitance. A 50-fold increase in capacitance is obtained within three minutes.

Example 4

5 meters of cable, as described below, were immersed in a solution of 30% (by volume) hydroxy polybutylene adipate in propanone, and left for 24 hours. The solution and immersed cable were then subjected to a pressure of 1.4 x 10$^5$ pascals (1.4 bar) under nitrogen for half an hour. The cable sample was then removed from the solution and allowed to air dry in ambient conditions for 24 hours.

The sample cable was of a coaxial arrangment with the following construction: central conductor of 37/.2mm TPC, insulation of Gore-Tex (RTM) (nominal density 45 kg m$^{-3}$) with a wall thickness of 1mm, and a braid of 1/.1 mm TPC with an 80% coverage.

The response of the sensor cable to three basic solutions is given in tables 11-13. The central 10cm portion of 30cm length cable sample was immersed in the test liquids.

Table 11

| The change in capacitance on immersion in concentrated sodium hydroxide solution. | |
| --- | --- |
| CAPACITANCE (pF) | TIME (MINS) |
| 55 | 0 |
| 70 | 1 |
| 73 | 2 |
| 74 | 3 |
| 76 | 4 |
| 77 | 5 |
| 87 | 10 |

Table 12

| The change in capacitance on immersion in concentrated potassium hydroxide solution. ||
| CAPACITANCE (pF) | TIME (MINS) |
| --- | --- |
| 60 | 0 |
| 71 | 1 |
| 73 | 2 |
| 75 | 3 |
| 77 | 4 |
| 78 | 5 |
| 83 | 10 |

Table 13

| The change in capacitance on immersion in concentrated sodium hypochlorite solution. ||
| CAPACITANCE (pF) | TIME (MINS) |
| --- | --- |
| 52 | 0 |
| 58 | 1 |
| 62 | 2 |
| 64 | 3 |
| 72 | 4 |
| 74 | 5 |
| 84 | 10 |

**Claims**

1. A detection system for monitoring the presence of a liquid consisting of or comprising a mineral or organic acid or alkali, the system comprising a sensor in the form of a pair of conductors extending in side-by-side relationship and isolated from one another by an insulator, the insulator comprising a matrix material impregnated with a substance which is hydrophobic but which on contact with the said liquid reacts to form a substance capable of transmitting the acid or alkali and thereby varying an electrical characteristic of the insulator, and means for detecting a variation in said electrical characteristic.

2. A detection system according to claim 1 wherein the conductors are arranged coaxially.

3. A detection system according to claim 1 or claim 2 wherein the matrix material is micro-porous polytetrafluoroethylene (PTFE) or other hydrophobic open cell structure.

4. A detection system according to any preceding claim for the detection of acids wherein the impregnating substance is selected from the group of substances comprising acid amides, fatty amines, imidazolines, polysiloxanes, aliphatic and aromatic dibasic esters, polyester oligomers, polybutene oligomers and derivatives of ricinoleic acid.

5. A detection system according to any one of claims 1 to 3 for the detection of acids wherein the impregnating substance is oleamide.

6. A detection system according to any one of claims 1 to 3 for the detection of acids wherein the impregnating substance is di(2-ethylhexyl) sebacate.

**7.** A detection system according to any one of claims 1 to 3 for the detection of acids wherein the impregnating substance is essentially methyl phenyl polysiloxane.

**8.** A detection system according to any one of claims 1 to 3 for the detection of alkalis wherein the impregnating substance is polybutylene adipate.

## Revendications

**1.** Un système de détection pour contrôler la présence d'un liquide consistant en ou comprenant une base ou un acide organique ou minéral, le système comprenant un capteur sous la forme d'une paire de conducteurs disposés dans une relation côté-à-côté et isolés l'un de l'autre par un isolateur, l'isolateur comprenant un matériau formant matrice imprégné d'une substance qui est hydrophobe mais qui au contact dudit liquide réagit pour former une substance capable de transmettre l'acide ou la base et par conséquent de faire varier une caractéristique électrique de l'isolateur, et des moyens de détecter une variation de ladite caractéristique électrique.

**2.** Un système de détection selon la revendication 1 dans lequel les conducteurs sont arrangés de manière coaxiale.

**3.** Un système de détection selon la revendication 1 ou la revendication 2 dans lequel le matériau formant matrice est du polytétrafluoroéthylène (PTFE) micro-poreux ou une autre structure hydrophobe en cellules ouvertes.

**4.** Un système de détection selon l'une quelconque des revendications précédentes pour la détection des acides dans lequel la substance d'imprégnation est choisi dans le groupe de substances comprenant les amides acides, les amines grasses, les imidazolines, les polysiloxanes, les esters dibasiques aliphatiques et aromatiques, les oligomères de polyester, les oligomères de polybutène et les dérivés de l'acide ricinoléique.

**5.** Un système de détection selon l'une quelconque des revendications 1 à 3 pour la détection des acides dans lequel la substance d'imprégnation est l'oléamide.

**6.** Un système de détection selon l'une quelconque des revendications 1 à 3 pour la détection des acides dans lequel la substance d'imprégnation est le sébacate de di(2-éthylhexyle).

**7.** Un système de détection selon l'une quelconque des revendications 1 à 3 pour la détection des acides dans lequel la substance d'imprégnation est essentiellement le méthyle phényle polysiloxane.

**8.** Un système de détection selon l'une quelconque des revendications 1 à 3 pour la détection des bases dans lequel la substance d'imprégnation est l'adipate de polybutylène.

## Patentansprüche

**1.** Detektorsystem zum Überwachen des Vorhandenseins einer Flüssigkeit, die besteht aus oder enthält: ein Mineral oder eine organische Säure oder ein Alkali, umfassend: einen Sensor in Form eines Paars von Leitern, die sich Seite an Seite erstrekken und durch einen Isolator gegeneinander isoliert sind, wobei der Isolator ein Grundmaterial ist, welches mit einer Substanz imprägniert ist, die hydrophob ist, jedoch in Berührung mit der Flüssigkeit reagiert und eine Substanz bildet, die die Säure oder den Alkali zu übertragen in der Lage ist, um so einen elektrischen Kennwert des Isolators zu verändern, und Mittel zum Erfassen einer Änderung des elektrischen Kennwerts.

**2.** Detektorsystem nach Anspruch 1, bei dem die Leiter koaxial angeordnet sind.

**3.** Detektorsystem nach Anspruch 1 oder 2, bei dem das Grundmaterial mikroporöses Polytetrafluorethylen (PTFE) oder eine andere hydrophobe offene Zellenstruktur ist.

**4.** Detektorsystem nach jedem der vorhergehenden Ansprüche zum Feststellen von Säuren, bei dem die imprägnierende Substanz ausgewählt ist aus der Gruppe von Substanzen, die Säureamide, aliphatische Amine, Imidazoline, Polysiloxane, aliphatische und aromatische zweibasische Ester, Polyester-Oligomere, Polybutylen-Oligomere und Derivate von Rizinusölsäure.

5.  Detektorsystem nach einem der Ansprüche 1 bis 3 zum Feststellen von Säuren, wobei die imprägnierende Substanz Oleamid ist.

6.  Detektorsystem nach einem der Ansprüche 1 bis 3 zum Erkennen von Säuren, wobei die imprägnierende Substanz Di(2-Ethylhexyl)-Sebacetat ist.

7.  Detektorsystem nach einem der Ansprüche 1 bis 3 zum Erkennen von Säuren, bei dem die imprägnierende Substanz im wesentlichen Metylphenylpolysiloxan ist.

8.  Detektorsystem nach einem der Ansprüche 1 bis 3 zum Erkennen von Alkali, bei dem die imprägnierende Substanz Polybutylen-Adipat ist.